# EUROPEAN PATENT SPECIFICATION

(11) **EP 0 980 132 B1**
(45) Date of publication and mention of the grant of the patent: **27.07.2005**
(21) Application number: 99115149.9
(22) Date of filing: 12.08.1999
(51) Int. Cl.: H02K 9/22, H02K 9/19, H02K 1/24

(54) **AC generator for vehicle**
Wechselstromgenerator für Kraftfahrzeuge
Alternateur pour véhicule

(30) Priority: 12.08.1998 JP 22784298
(43) Date of publication of application: 16.02.2000
(73) Proprietor: Hitachi, Ltd., Tokyo (JP)
(72) Inventor: Kanazawa, Hiroshi, Hitachiota-shi, Ibaraki 313-0012 (JP); Tahara, Kazuo, Hitachi-shi, Ibaraki 316-0032 (JP); Honda, Yoshiaki, Hitachinaka-shi, Ibaraki 312-0052 (JP); Takano, Masami, Hitachinaka-shi, Ibaraki 312-0063 (JP); Innami, Toshiyuki, Tsuchiura-shi, Ibaraki 300-0045 (JP); Suzuki, Osamu, Niihari-gun, Ibaraki 315-0055 (JP)
(74) Representative: Beetz & Partner Patentanwälte

(56) References cited:
- EP-A- 0 384 568
- GB-A- 2 220 799
- US-A- 4 922 148
- US-A- 5 313 698
- US-A- 5 329 199

## Description

### BACKGROUND OF THE INVENTION

Present invention relates to an AC generator, and especially relates to an AC generator which is suitable as an electric generation device used in a vehicle.

A device provided a resin material in a slot of a stator winding in order to reduce magnetism sound, is disclosed in Japanese Patent Laid-open No. 7-255140 bulletin.

However, in the above prior art, as the resin is arranged only in the slot part, the electromagnetic sound in the slot part may be reduced, but it is not considered on an electromagnetic sound which occurs at an end coil.

Moreover, as an air cooling means is used for cooling, when the end coil is molded with the resin, there arise the problems as that radiation of heat becomes bad.

US 5 329 199 discloses a rotor assembly with molded fans. Here, mold material is injection molded at high pressure into open spaces between pole pieces and a mold.

US 5 313 698 discloses a process for the manufacture of the stator of an electrical machine. Here, two preassembled stator plate stacks are kept axially distant from each other and are molded together by a heat conducting plastic. This stator constructional unit is then removed from the compression mold and inserted into a heated pot shaped metal housing, which in turn - during use - is cooled from outside.

### SUMMARY OF THE INVENTION

The first object of the present invention is to reduce the electromagnetic sound in the AC generator.

Moreover the second object of the present invention is to realize cooling enhancement of the field winding and the stator winding.

In order to achieve two objects mentioned above, a liquid cooling system using a liquid refrigerant is adopted as a cooling means in the present invention, claw shape magnetic poles and a field winding of the rotor are molded with a good thermal conduction resin, thereby rigidity of the rotor is raised simultaneously.

Moreover, a slot part of the stator core and whole end coil are hardened by said good thermal conduction resin, thereby total rigidity of the stator is raised in the same way as the rotor and generation of the electromagnetic sound is reduced. Moreover heat from a heat generation origin is thermally conducted through said good thermal conduction resin, thereby the cooling enhancement is planned for.

Furthermore, a gap between the bracket and the rotor is constructed to be narrowed in the present invention.

### BRIEF DESCRIPTION OF THE DRAWINGS

FIG. 1 is a total construction view of the vehicle which shows a relationship between the AC generator for the vehicle and the engine as the first embodiment of the present invention.
FIG. 2 is a longitudinal sectional view of the total construction of the AC generator for the vehicle as the first embodiment of the present invention.
FIG. 3 is a partial enlarged view of the AC generator for the vehicle as the first embodiment of the present invention.
FIG. 4 is a partial enlarged view of the AC generator for the vehicle as the second embodiment of the present invention.

### DETAILED DESCRIPTION OF THE PREFERRED EMBODIMENT

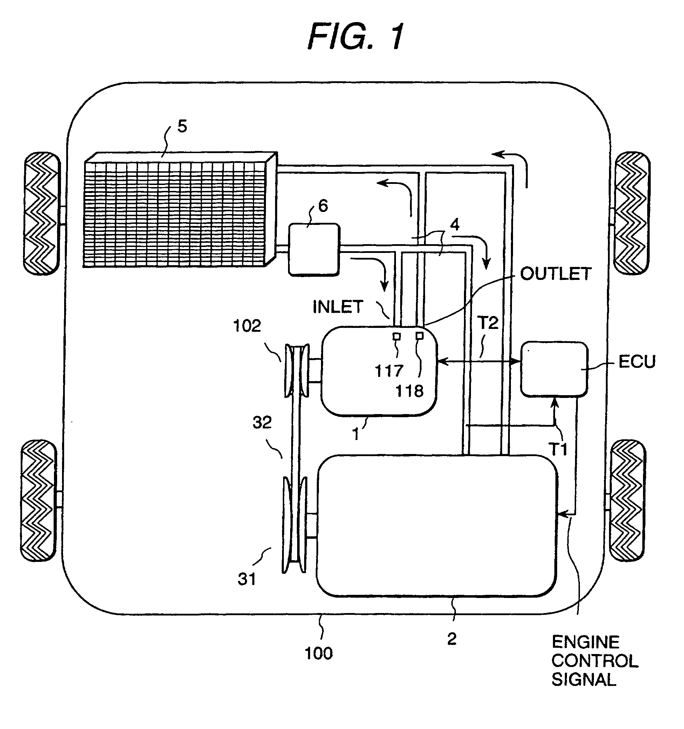

The first embodiment of the present invention will be explained referring to FIG. 1 to FIG. 3 as follows.

Fig. 1 is a total block-diagram which shows a relationship between the AC generator and an engine installed in an engine room of a vehicle 100.

In FIG. 1, an AC generator 1 is connected to a pulley 102 arranged on a shaft end of the AC generator 1 for an engine 2 and a pulley 31 arranged on a shaft end of the engine 2 through belt 32. A pulley ratio of this pulley 102 and the pulley 31 is from 2 to 3 times, and the AC generator turns at a higher speed than the engine.

Moreover the cooling water of the AC generator 1 is flown in to two radiator hoses 4 connected with a radiator 5 for its heat exchanging, and a cooling-water pump 6 to circulate the cooling water is arranged at an outlet port side of the radiator 5. This cooling-water pump 6, although this is not shown in the figures, is normally connected to the pulley 31 of the engine 2, and the cooling-water pump 6 may transmit a quantity of the water to the AC generator 1 in proportion to a revolutional speed of the engine 2.

Moreover, the water flown from the radiator 5 through the cooling-water pump 6 is also used for cooling of the engine 2. The radiator hose 4 is connected to the outlet port side of the AC generator 1, and as a cooling stem is constructed to form a parallel connection. Therefore, balance of water quantity flown in the parallel connected cooling stem is decided by a pressure loss in a pipe arrangement of each cooling stem.

In the AC generator 1, coolant temperature sensors are installed in respective radiator hoses so as to detect the temperature of the coolant, and the detected temperature signals are inputted to an ECU as a control unit for the engine 2 so as to be used to control the generated electric current of the AC generator 1 for the vehicle 100.

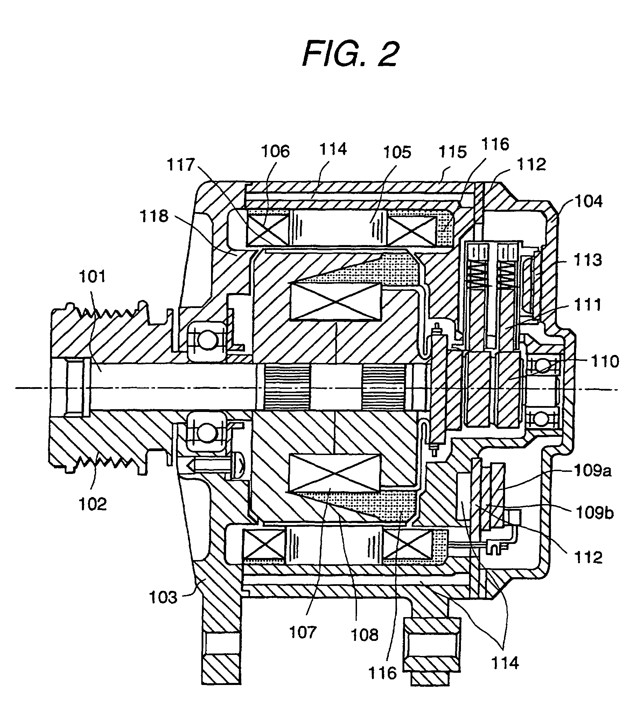

In FIG. 2, a longitudinal sectional view showing a total construction of the AC generator for the vehicle is shown. The AC generator 1 has two brackets, a bracket 103 arranged at a pulley side and a rear bracket 104 arranged at a counter pulley side. A shaft 101 is supported through a bearing in a central part of both of the brackets, and a pulley 102 is installed on one end of the shaft 101 and a collector ring 110 is installed on another end thereof. The pulley 102 is connected to the pulley 31 arranged on the output shaft of the engine through the belt 32 shown in FIG. 1, and turns in proportion to a revolutional speed of the engine 2. A brush 111 is mounted on the collector ring 110, and electric power is supplied from the brush 111 into a field winding 107 which will be explained later.

Moreover in a central part of the shaft 101, a rotor is installed, and a pair of claw shape magnetic poles 108 having a configuration of a claw shape is arranged in a periphery part of the rotor.

Moreover the field winding 107 is wound in a central part of the rotor, and the claw shape magnetic poles 108 are magnetized by flowing a direct current from the collector ring 110 into the field winding 107.

A good thermal conduction resin 116 is arranged in a part between the claw shape magnetic pole 108 and the field winding 107, and a scattering prevention cover 117 to prevent jumping out of the good thermal conduction resin 116 is arranged in the most peripheral part of the claw shape magnetic pole 108 of the rotor.

A housing 115 enclosing a stator core 105 is arranged between the pulley side drive side bearing bracket 103 and the counter-pulley side rear bracket 104, and the internal circumference of the stator core 105 is arranged to be separated keeping a very small interval from the scattering prevention cover 117 arranged on the claw shape magnetic pole 108 of the rotor. This interval is decided beforehand based on a relationship of necessary mechanical characteristic, and is around 0.4 mm generally.

A plurality of teeth and slots are arranged in the stator core 105, the stator windings 106 of three phase are bound in the slots being a concave part of this stator core 105, and the three phase voltage is induced in the stator winding 106, when the claw shape magnetic pole 108 turns and is magnetized by being driven with the engine. The stator core 105 is fixed inside the housing 115 by a shrinkage fit method and the good thermal conduction resin 116 is filled up in a clearance around the end coil part of the stator winding 106 and in the slot of the stator core 105, so that the stator core 105, the stator winding 106 and the housing 115 are formed with the good thermal conduction resin 116 as one body as the result, so as to be connected thermally. The good thermal conduction resin described here is, for example, material of a silicon rubber system having a thermal conductivity greater than 1.5 W/mK or epoxy resin having a high thermal conductivity.

Inside of the rear bracket 104 at the counter-pulley side, a plus fin 109a of diodes which is a module of the diodes constituting a rectifier circuit and a minus fin 109b of the diodes are fixed to a rear plate 112, which tightly seals a cooling water channel 114.

Moreover an integrated circuit regulator 113 to adjust the power generation voltage is fixed so as to be in contact with the rear bracket 104 mentioned above.

The plus fin 109a of the diodes is connected to a plus electrode of the battery which is not illustrated, and the minus fin 109b of the diodes, having an electric potential the same as that of the AC generator body, is connected electrically to the minus terminal side of the battery which is not illustrated. These diodes full-wave rectify the alternating current voltage that is induced in the stator winding 106 to convert it into DC voltage.

The integrated circuit regulator 113 controls the field winding current so that the DC voltage that is rectified by the diodes in order to charge the battery is kept to be a fixed voltage of about 14.3 V.

In the AC generator for the vehicle constituted as above, when the pulley 102 turns by being driven by the engine 2, the shaft 101 turns together with the collector ring 110 and the rotor, the direct current flowing from the brush 111 is fed into the field winding 107 disposed in the rotor, and the field winding 107 works to constitute a N pole and a S pole in each of the claw shape magnetic poles 108.

The magnetic flux generated by the field winding 107 forms a magnetic circuit so that the flux emerging from the claw part being the N pole of the claw shape magnetic pole, passes through the stator core 105 and comes back to the claw part being the S pole of the claw shape magnetic pole.

The magnetic flux of this magnetic circuit crosses the stator winding 106, thereby an induced voltage of three phase occurs in the stator winding 106.

The three-phase induced voltage is full-wave rectified by the diode groups arranged on the plus fin 109a and the minus fin 109b and is converted into a DC voltage, and the rectified DC voltage is adjusted by the integrated circuit regulator 113 so as to keep a fixed voltage of about 14.3 V. In order to greatly increase the power generation current largely here, permanent magnets may be arranged between the claw magnetic poles in such a direction that like poles oppose each other.

Although it is not shown by the figures in this embodiment, water cooling is adopted as the cooling system and it is possible to hope for a good cooling effect even if electricity is generated at low speed; high heat-resistant neodymium magnets are adopted as the permanent magnets arranged between the poles. Next, the cooling method of the heat generated by copper loss in the stator winding 106 will be explained.
As described above, the stator core 105 having the stator winding 106 therein is fixed to the inside of the housing 115 by a shrinkage fit method, whereby a construction easily to conduct the heat into the housing 115 is provided.

Moreover as described above, a heat radiation path is provided with a high thermal conduction resin 116 so that the housing 115 thermally comes into contact with the inside of the stator winding 106 in order to enhance heat radiation of the stator winding 106.

Plural passages are provided on a periphery of the housing 115 in a direction parallel to the shaft, and are closed tightly by the drive side bearing bracket 103 and the rear plate 112 so as to constitute a water channel in a zigzag state.
The cooling water flows through the water channel constituted in the zigzag state around the periphery of the housing 115, and begins to cool the stator core 105 from its periphery.

Moreover the heat generated by the copper loss of the field winding 107 in the rotor is radiated towards the inside of the drive side bearing bracket 103 and the part of the housing 115 opposite to the pulley side and facing the surface of the rotor with a slight gap.

In this way relating to the cooling of the rotor, the end and peripheral surfaces of the rotor are arranged to indirectly contact with the water channels 114 through which the coolant flows, and the construction effectively promotes the cooling of the rotor.

Moreover, although it is not shown in the figures, in the present invention, eight water channels are arranged within the housing 115, and the cooling water flows in from the counter-pulley side and turns at the drive side bearing bracket 103, flows towards the counter-pulley side again and turns back to the pulley side, thereby after the cooling water makes 4 round trips, it flows out from the counter-pulley side.

In this way an even number of water channels are provided, a pipe laying of the water supply and drainage may be made for the same direction, and it becomes easy to use a radiator hose. Moreover by arranging a hose joint of the water supply and drainage at the counter-pulley side, the possibility that the hose coils itself round the belt may be greatly reduced.

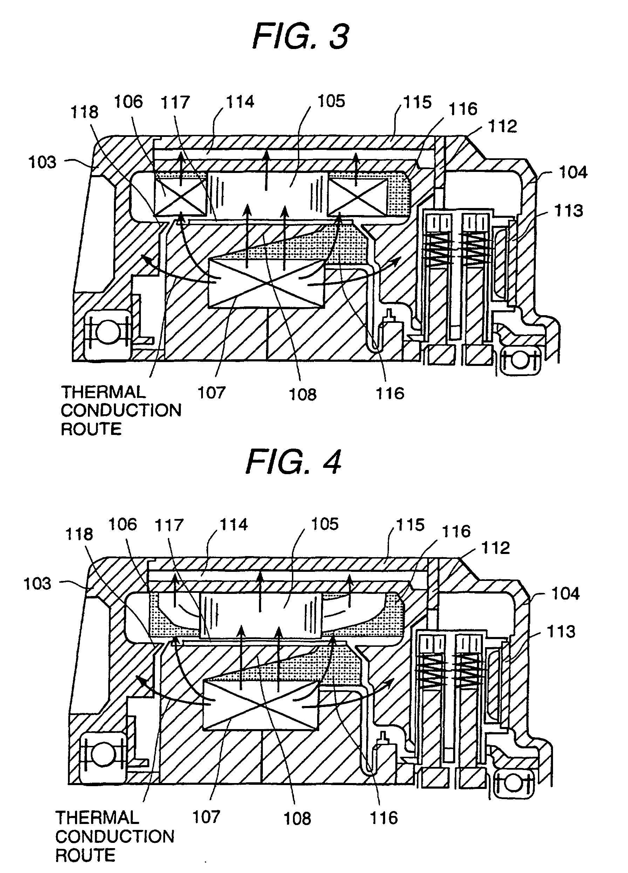

FIG. 3 is a partial enlarged view of the AC generator for the vehicle and shows a heat radiation path of the stator and the rotor shown in FIG. 2.
An arrow in the figure shows the heat radiation path, and explanation relating to the components being same as FIG. 2 is omitted.

The field winding 107 is wound in a central part of the rotor and the heat due to copper loss occurs in this field winding 107.

If this heat is not radiated fully, the field winding resistance becomes big and the field current decreases.
When the field current decreases, the power generation current decreases too.

As water cooling construction is adopted in the present invention, how to conduct the heat to the coolant determines the performance of the AC generator.

Then, the peripheral surface and claw shape magnetic pole 108 of field winding 107 are thermally interconnected with the good thermal conduction resin such as a silicon rubber system of high thermal conductivity, thereby the heat generated in the field winding 107 is conducted to the surface of the rotor. The heat is conducted into the water channel 114 where the coolant circulates, through the good thermal conduction resin 116 filling up the stator core 105 and the stator winding 106.

Moreover, as the other path of the heat to be transmitted is shown by arrows in the figure, the heat is transmitted into the coolant path 114 through the drive side bearing bracket 103 or the housing 115 that is arranged at the pulley side and the surface of the rotor facing thereto.
The integrated circuit regulator 113 to adjust the power generation voltage is arranged on the rear bracket 104; however, it may be arranged on the rear plate 112, which closes the coolant water channel 114.

The second embodiment of the present invention will be explained referring to FIG. 4.

FIG. 4 is a partial enlarged view of the AC generator for the vehicle and the stator winding 106 is arranged to be bent towards the coolant path 114 side; detailed explanation relating to the construction is omitted, as it is similar to FIG. 2.

As shown in FIG. 4, as the thermal resistance value of the stator winding 106 and the housing 115 can be decreased by bringing the stator winding 106 close to the water channel 114, it becomes possible to cool the stator winding 106 well. Thereby, the temperature increase of the stator winding 106 is reduced, the ohmic value dependent on the temperature rise value does not increase, and the impact of the copper loss on generating performance can be reduced.

Moreover in order to increase the area of the surfaces of the rotor facing the drive side bearing bracket 103 and the housing 115, it is possible to increase a thermal conduction area by providing a convex part 118 on the drive side bearing bracket side and the housing 115.

In the above explanation, although according to the invention both of the stator winding 106 and the field winding 107 are molded with the good thermal conduction resin 116, it is effective too in a case that either one of the stator winding 106 and the field winding 107 is molded with the good thermal conduction resin 116.

Moreover, the claw shape magnetic pole and the field winding of the rotor are hardened with the good thermal conduction resin, thereby the electromagnetic oscillation may be suppressed and the noise will be reduced effectively. Moreover the stator winding in the slot of the stator core, the coil end, and the housing are hardened with the good thermal conduction resin in the same way, thereby the electromagnetic oscillation may be reduced, and reduction of undesired sound may be effective.

In the description mentioned above, the radiator for cooling is combined with the radiator for cooling the engine; however it is effective in the same way to use a radiator exclusively used for the AC generator.

In the present invention, the AC generator for the vehicle is cooled by using liquid coolant, a good thermal conduction resin of which the thermal conductivity is high, is arranged between the claw shape magnetic pole and the field winding of the rotor, and a good thermal conduction resin of which the thermal conductivity is similarly high, is arranged in the slot where the stator winding of the stator is inserted and the coil end and the housing are molded with the good thermal conductor. Thereby, the cooling effect of the rotor and the stator is improved. Moreover, it has a noise reduction effect, since it becomes possible to reduce the electromagnetic vibration of the rotor and the stator.

According to the present invention as stated above, the reduction of the electromagnetically generated, acoustic sound becomes possible in the AC generator, and improvement of the cooling effect of the field winding and the stator winding may be realized.

## Claims

1. An AC generator (1) comprising
a housing (115),
a stator having a stator winding (106),
a rotor which is arranged to be separated from said stator keeping a predetermined interval and having a pair of claw shape magnetic poles (108) having plural claw-parts formed on a point of the claw shape magnetic pole, and a field winding (107),
**characterized in that**
the housing (115) is provided with cooling water channels,
the stator has a stator core (105) fixed to the inside of the housing, the stator winding (106) being wound in a slot of the stator core,
a good thermal conductor (116) is filled between a surface of said claw magnetic pole and a periphery part of said field winding of said rotor, and
a good thermal conductor (116) is filled in a clearance of the slot of said stator core (105) and an end coil part so that the stator core, the stator winding (106) and the housing (115) are formed with said thermal conductor as one body so as to be thermally connected.

2. An AC generator according to claim 1, **characterized by** further comprising
a scattering prevention cover (117) for preventing said good thermal conduction body from scattering, provided on a periphery part of said rotor.

3. An AC generator according to claim 1 or 2, **characterized in that**
said stator winding is arranged to be bent towards a channel of said liquid refrigerant.

4. An AC generator according to one of the claims 1 to 3, **characterized by** further comprising
a drive side bearing bracket (103) contacting an end of said housing (115) while leaving a gap in a shaft direction to said rotor.

5. An AC generator according to claim 4, **characterized by** further comprising
convex parts (118) provided on said drive side bearing bracket (103) and said housing (115) facing said rotor.

## Patentansprüche

1. Wechselstromgenerator (1) mit
einem Gehäuse (115),
einem Stator mit einer Statorwicklung (106),
einem Rotor, der so angeordnet ist, dass er vom Stator unter Einhaltung eines vorbestimmten Abstandes entfernt ist und der zwei klauenförmige Magnetpole (108) mit mehreren Klauenteilen hat, die an einer Stelle des klauenförmigen Magnetpols ausgebildet sind, und eine Feldwicklung (107),
**dadurch gekennzeichnet, dass**
das Gehäuse (115) mit Kühlwasserkanälen versehen ist,
der Stator einen Statorkern (105) hat, der an der Innenseite des Gehäuses befestigt ist, wobei die Statorwicklung (106) in einem Schlitz des Statorkerns gewickelt ist,
wobei ein guter thermischer Leiter (116) zwischen einer Oberfläche des klauenförmigen Magnetpols und einen Randteil der Feldwicklung des Rotors gefüllt ist, und
wobei ein guter thermischer Leiter (116) in einem Freiraum des Schlitzes des Statorkerns (105) und einen Endspulenteil so gefüllt ist, dass der Statorkern, die Statorwicklung (106) und das Gehäuse (115) mit dem thermischen Leiter als ein Körper ausgebildet sind, sodass sie thermisch verbunden sind.

2. Wechselstromgenerator nach Anspruch 1, weiter **gekennzeichnet durch** eine Streuverhinderungsabdeckung (117) zum verhindern des Ausstreuens des Körpers guter thermischer Leitfähigkeit, die an einem Randteil des Rotors vorgesehen ist.

3. Wechselstromgenerator nach Anspruch 1 oder 2, **dadurch gekennzeichnet, dass** die Statorwicklung so angeordnet ist, dass sie auf einen Kanal des flüssigen Kühlmittels zugebogen ist.

4. Wechselstromgenerator nach einem der Ansprüche 1 bis 3, weiter **gekennzeichnet durch** eine antriebsseitige Lagerklammer (103), die ein Ende des Gehäuses (115) berührt, während sie zum Rotor hin in Wellenrichtung einen Spalt lässt.

5. Wechselstromgenerator nach Anspruch 4, weiter **gekennzeichnet durch** konvexe Teile (118) an der antriebsseitigen Lagerklammer (103) und dem Gehäuse (115) gegenüber dem Rotor.

## Revendications

1. Alternateur (1) comprenant
un boîtier (115),
un stator muni de bobinages de stator (106),
un rotor qui est disposé séparé dudit stator en respectant un intervalle d'écartement prédéterminé et qui comporte une paire de pôles magnétiques en forme de griffes (108), comprenant une pluralité de portions en forme de griffe en un endroit du pôle magnétique en forme de griffes et un enroulement d'excitation du rotor (107),
**caractérisé en ce que**
le boîtier (115) est muni de canaux d'eau de refroidissement,
le stator comporte un noyau de stator (105) fixé sur l'intérieur du boîtier, les bobinages de stator (106) étant enroulés dans une fente ménagée dans le noyau de stator,
une matière présentant de bonnes propriétés thermoconductrices (116) est appliquée entre la surface dudit pôle magnétique en forme de griffes et la portion périphérique dudit enroulement d'excitation dudit rotor, et
une matière présentant de bonnes propriétés thermoconductrices (116) est appliquée dans le dégagement existant entre la fente dudit noyau de stator (105) et la portion correspondant à la boucle externe du bobinage, ce qui fait que le noyau de stator, les bobinages de stator (106) et le boîtier (115) sont de ce fait constitués par la matière présentant de bonnes propriétés thermoconductrices en un ensemble monobloc, de manière à être reliés les uns aux autres sur le plan de la transmission de la chaleur.

2. Alternateur selon la revendication 1, **caractérisé en ce qu'**il comporte en outre
une enveloppe de contention (117), destinée à empêcher la dispersion de la résine à bonnes propriétés thermoconductrices, disposée sur la portion périphérique dudit rotor.

3. Alternateur selon la revendication 1 ou 2, **caractérisé en ce que** lesdits bobinages de stator sont disposés de manière à présenter une inclinaison en direction d'un circuit véhiculant ledit liquide refrigerant.

4. Alternateur selon l'une des revendications 1 à 3, **caractérisé en ce qu'**il comporte en outre
un support de palier côté entraînement (103) en contact avec une extrémité dudit boîtier (115) tandis qu'un intervalle d'écartement dans la direction de l'arbre par rapport audit rotor est conservé.

5. Alternateur selon la revendication 4, **caractérisé en ce qu'**il comprend en outre
des portions convexes (118) ménagées sur ledit support de palier côté entraînement (103) et ledit boîtier (115) en face dudit rotor.
